# EUROPEAN PATENT SPECIFICATION

(11) **EP 0 931 251 B1**
(45) Date of publication and mention of the grant of the patent: **02.01.2003**
(21) Application number: 98902843.6
(22) Date of filing: 28.01.1998
(51) Int. Cl.: G01L 17/00

(54) **METHOD AND APPARATUS FOR DETERMINING TIRE INFLATION STATUS**
VERFAHREN UND ANORDNUNG ZUR BESTIMMUNG DES REIFENFÜLLZUSTANDES
PROCEDE ET APPAREIL D'EVALUATION DE L'ETAT DE GONFLAGE D'UN PNEU

(30) Priority: 29.01.1997 US 790634
(43) Date of publication of application: 28.07.1999
(73) Proprietor: SHELL INTERNATIONALE RESEARCH MAATSCHAPPIJ B.V., 2596 HR Den Haag (NL)
(72) Inventor: BASS, Ronald, Marshall, Houston, TX 77005 (US)
(74) Representative: Zeestraten, Albertus Wilhelmus Joannes
(86) International application number: PCT/US98/01478
(87) International publication number: WO 98/033049

(56) References cited:
- EP-A- 0 695 935
- NL-A- 7 900 587
- US-A- 5 585 604

## Description

### Technical Field

The invention is related to a method and apparatus for determining the inflation status of a vehicle pneumatic tire as the tire rolls over the apparatus and while the tire is attached to the vehicle. Access to the tire valve stem is not required.

### Background Art

U.S. Patent Nos. 5,445,020 and 5,396,817 issued to Rosensweig disclose tire inflation sensors for making a series of point measurements and determining the pressure of a pneumatic tire mounted on a vehicle. The sensors are load cells mounted flush with the roadbed, i.e., there is no bar and thus no deformation of the tire other than that naturally occurring due to the load carried by the tire. Tire pressure distribution on the road surface is used, not total weight.

U.S. 2,126,327 to Hendel et al. does not use car weight in its analysis and does not use a bar. It makes some measurement of tire "force" distributed between a bladder and the surrounding road surface, but the bladder is not elevated above the roadbed. Rather, it is recessed, so tire deformation is not used in the process and total tire weight is not used.

U.S. 2,663,009 to Finan discloses a system for making an on-vehicle measurement of tire softness, not a road surface measurement. Something like a bar is used, but it does not measure total weight. This system can be calibrated for the specific tire on the specific vehicle whereas Applicant's invention will accommodate a wide variety of tires and vehicles.

U.S. 2,313, 156 to Kratt, Jr., measures the force profile across the tire, the same approach used in the Rosensweig patents. Tire deformation is not used and total tire weight is not used.

U.S. 3,715,720 to Jehle involves depressing a probe (point measurement as opposed to across the whole tire) which is maintained at a specified force. Total weight is not used.

In U.S. 3,973,436 to Linderman, force distribution across the tire is measured, similar to 2,313,156. Neither a bar nor total weight is used.

U.S. 5,289,718 to Mousseau discloses a method for measuring the force exerted by the tire in going over a step. It does not use a bar or total weight, and is not intended for underinflation measurement but for measurement of tire force on rough surfaces. No means is described for extracting inflation-related information.

Dutch patent application publication No. 79 00 587 relates to a device for checking automatically the pressure in a tire of a truck while said tire is attached to the truck, which device comprises a mechanical indicator to be installed in a road surface which gives a signal if the force exerted by the tire is below a predetermined value.

### Description of the Invention

It is an object of the invention to provide an improved tire checker.

To this end, the apparatus for determining the inflation status of a vehicle tire while said tire is attached to said vehicle, according to the invention comprises:
a scale plate to be installed in a road surface, said scale plate being supported by at least one load cell;
recording means connected to said at least one load cell for recording the weight on said scale plate with respect to time;
a deformation bar to be installed in said road surface and supported by at least one load cell, said deformation bar being raised above said road surface and adapted to deform said tire when said tire rolls over said deformation bar;
a recording means connected to said at least one load cell for recording the weight on said deformation bar with respect to time;
means for comparing a selected weight on said deformation bar with a selected weight on said scale plate and for forming a ratio thereof; and
means for comparing the ratio with a ration corresponding to a minimum acceptable inflation pressure for the tire.

It is also an object of the invention to provide a method of determining the inflation status of a vehicle tire.

To this end, such a method according to the invention comprises recording a first signal representing the weight on said tire with respect to time when the tire is rolling on a flat surface; recording a second signal representing the weight on said tire with respect to time when the tire is rolling over a raised object; determining the maximum Y of the first signal and the maximum X of the second signal; calculating a ratio R by dividing the maximum X of the second signal by the maximum Y of the first signal; and comparing the calculated ratio R (= X/Y) with a predetermined value for the ratio R pertaining to the maximum Y of the first signal and giving an underinflation signal if the calculated ratio is below the predetermined value.

### Brief Description of the Drawings

Figure 1A is a schematic view of the mechanical components of the invention.
Figure 1B is a plan view of the components of Figure 1A.
Figures 1C-1E are three-dimensional views of the frame assembly, the weight assembly, and the cover plate assembly, respectively, for the system of Figure 1A.
Figure 1F is a side elevational view of the weight assembly of Figure 1D with partial cut-aways to show the load cells and feet.
Figure 2A is a conceptual view of the tire deformation of an underinflated tire as it rolls across a raised bar.
Figure 2B is a conceptual view of the tire deformation of a properly inflated tire as it rolls across a raised bar.
Figure 3 is a block diagram of the data generating, converting and gathering components required by the invention.
Figure 4 is a graph of bar:scale weight ratio vs. tire pressure for a wide range of vehicles having a wide range of tire sizes.
Figure 5 is a graph, made by using the data from Figure 4, for determining the weight-dependent threshold for unknown tires.
Figure 6 is a graph, analogous to Figure 4, of the bar reading vs. tire pressure, for the data used in obtaining Figure 4, showing a simple single-valued threshold independent of weight.
Figure 7 is a graph, analogous to Figure 4, of the bar/scale² reading vs tire pressure for data used in obtaining Figure 4, with a weight-dependent threshold shown.
Figure 8 is a graph, analogous to Figure 4, of the bar/scale² reading vs tire pressure for data used in obtaining Figure 4, with a weight-dependent threshold derived for one type of tire only.
Figure 9 is a graph of the load cell summer output voltage vs time of a Cadillac with low (15 psig) pressure in the front tire, wherein the signal has only three peaks because the front tire straddles the scale and the bar at the same time.
Figure 10 is a graph, analogous to Figure 9, of the load cell summer output vs time for a Cadillac with both tires at high pressure (30 psi), wherein the signal has four peaks because the tires are never on the bar and the scale at the same time.

### Detailed Description of the Preferred Embodiments

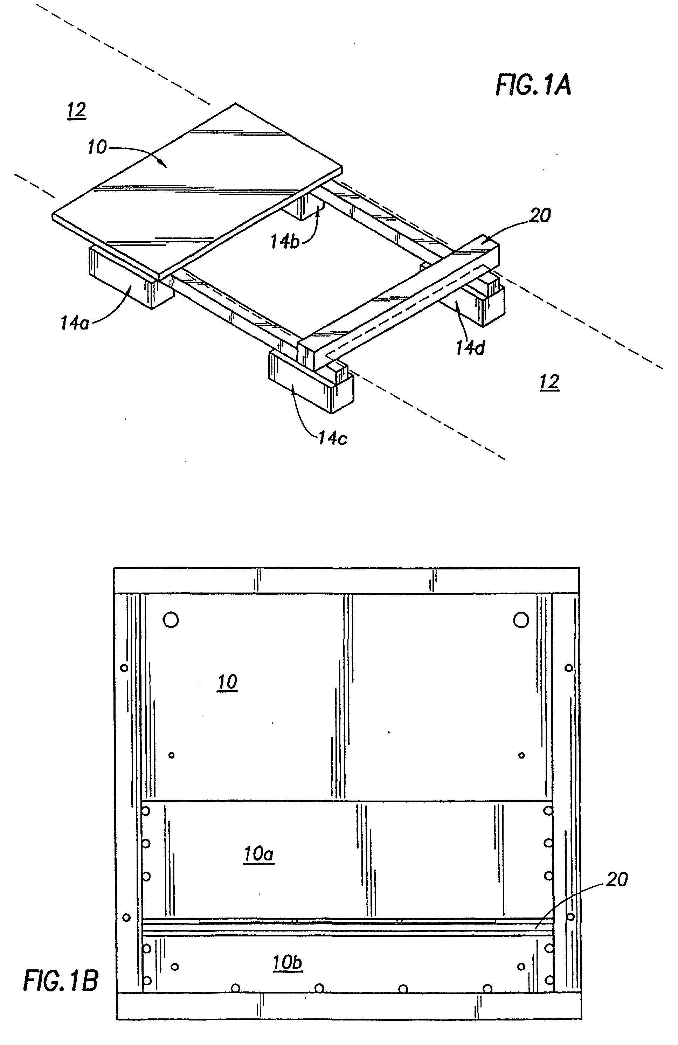

The following description is made with reference to only one side of a vehicle. It will be appreciated that the preferred and most efficient embodiment of the invention will include two identical systems per Figure 1A in order that the status of all four tires can be determined in a single pass.

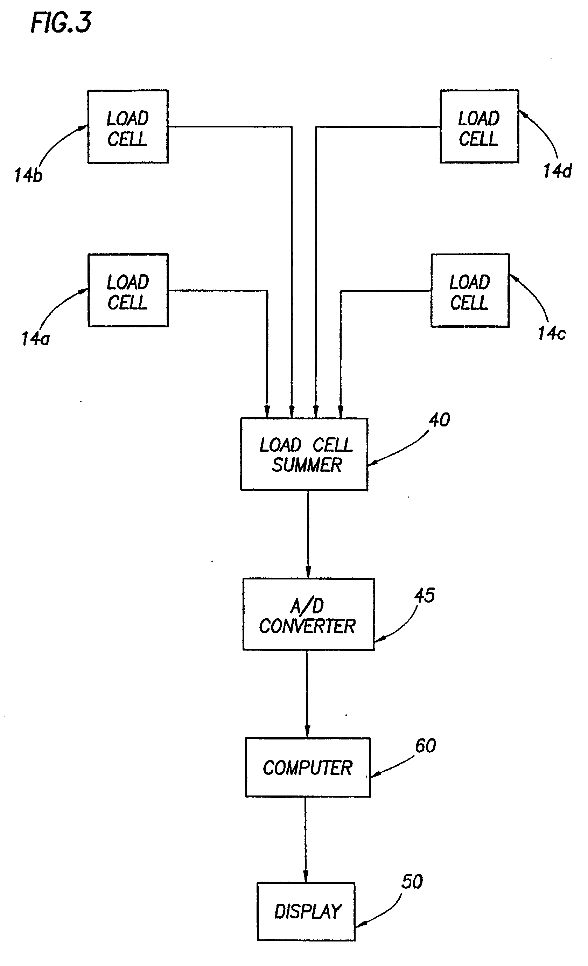

Referring to Figure 1A, a scale plate 10 is placed on a road surface 12. The road surface 12 is preferably the apron of an automobile service station, car wash, etc., with the scale plate 10 being situated such that an automobile can be driven over it when the driver desires some service such as fuel or a car wash. The scale plate 10 is flush with the road surface 12 and is supported by load cells 14a, 14b, 14c and 14d which, when deflected by the weight of the vehicle as the tire rolls over it, produce output voltages from their strain gauges. These output voltages from the strain gauges are transmitted to a load cell summer 40 (see Figure 3), which adds together the voltages from the four load cells. The maximum reading of the load cell summer 40 output from the scale is used for computations and is denoted as "Y." Figure 1B shows a plan view of the scale of Figure 1A with covers in place, including center plate 10a and exit cover 10b, and deformation bar 20. Center plate 10a and exit cover 10b are not supported by load cells. They are part of the frame assembly and, therefore an extension of the road surface 12. As described herein, the expression "road surface" is meant to include the center plate 10a and exit cover 10b.

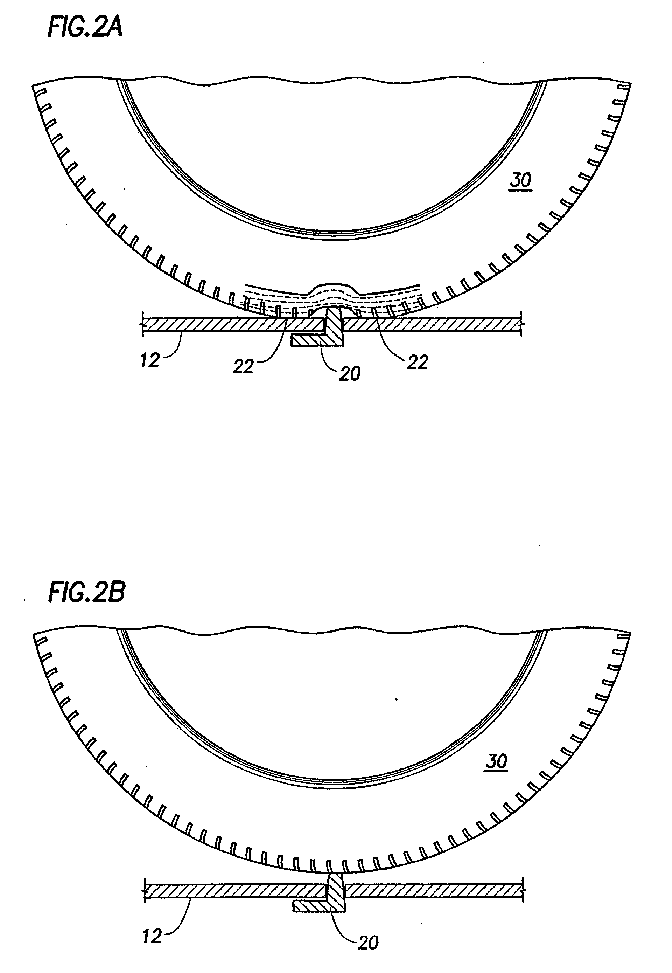

Situated proximate to, and preferably in the same tire-travel path with, scale plate 10 is a deformation bar 20 also supported by load cells, preferably the same load cells 14a, 14b, 14c and 14d used for the scale plate 10 measurements. As the tire rolls over the deformation bar 20 (see Figures 2A and 2B), voltages are produced by the load cell strain gauges. These voltages are transmitted to the load cell summer 40 and undergo the same type of transformation as did the signals from the scale plate 10. The maximum reading of the load cell summer 40 from the deformation bar 20 is used for computation and is denoted as "X." The analog outputs from the load cell summer 40 are input to the computer 60 via an analog-to-digital (A/D) converter 45. The maximum values X and Y are determined by the computer 60.

The deformation bar 20 protrudes slightly above the road surface 12 such that, as shown in Figure 2A, an underinflated tire deforms to such an extent that the tread of the tire 30 touches the road surface 12 on either side of the deformation bar 20 such as at the touch points 22. Thus, some of the load on the tire 30 is supported by the road surface 12 at touch points 22 and some of the load is supported by the deformation bar 20. The deformation of a properly inflated tire 30 is shown in Figure 2B which shows the tire 30 completely supported by the deformation bar 20 with no portion of the tire 30 touching, and being supported by, the road surface 12. In actual practice, a properly inflated tire carrying a heavy load may, in fact, touch the road surface as discussed below.

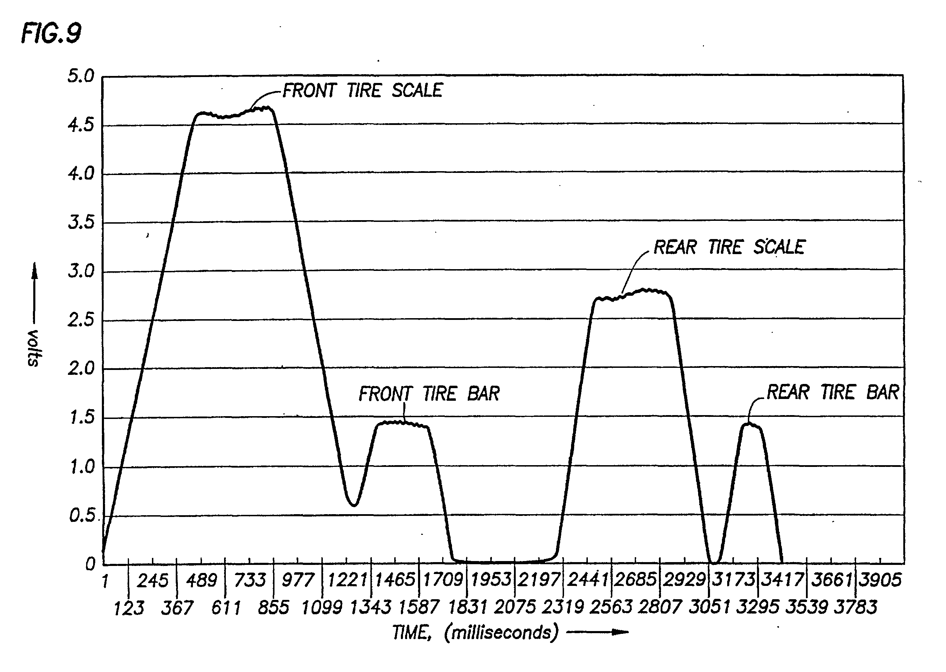

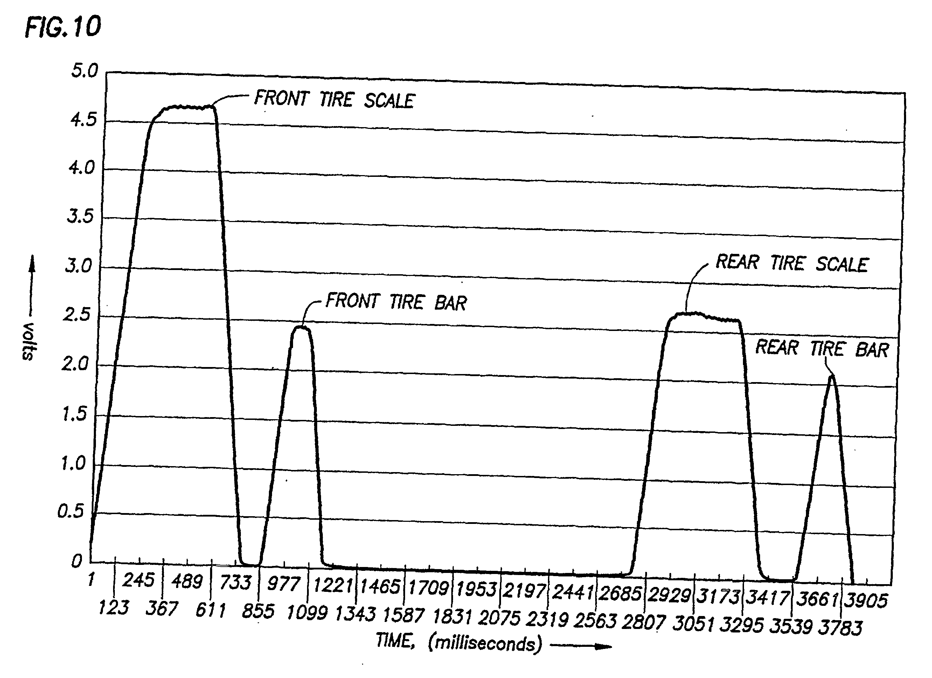

For a properly inflated tire, the signal from the load cell summer 40 from each side of the car consists of four sequential separated peaks: a scale plate 10 peak for the front tire, a deformation bar 20 peak for the front tire, a scale plate 10 peak for the rear tire, and a deformation bar 20 peak for the rear tire. These peaks are shown in Figure 10. If the tire pressure is low enough, the bottom of the tire broadens out in the direction of travel and does not completely clear the scale plate 10 before reaching the deformation bar 20. In this case, there will be fewer than four peaks. Figure 9 shows an example for a Cadillac with both tires at 15 psig. The front tire peaks are smeared together so that there are a total of three peaks. If both front and rear tires are low enough, there will be only two smeared peaks and no separated peaks. The scale plate 10 must be of such size as to accommodate the full footprint of the tire.

If the computer 60 detects only two or three peaks, it is assumed that some tires on the car are low. If this is all the information desired, it is not necessary to calculate ratios as subsequently described. Optionally, the computer 60 can tell whether the front or rear tire, or both, has the smeared peaks by comparing the width of the peaks near the bottom. The smeared peaks are much wider than the separated peaks.

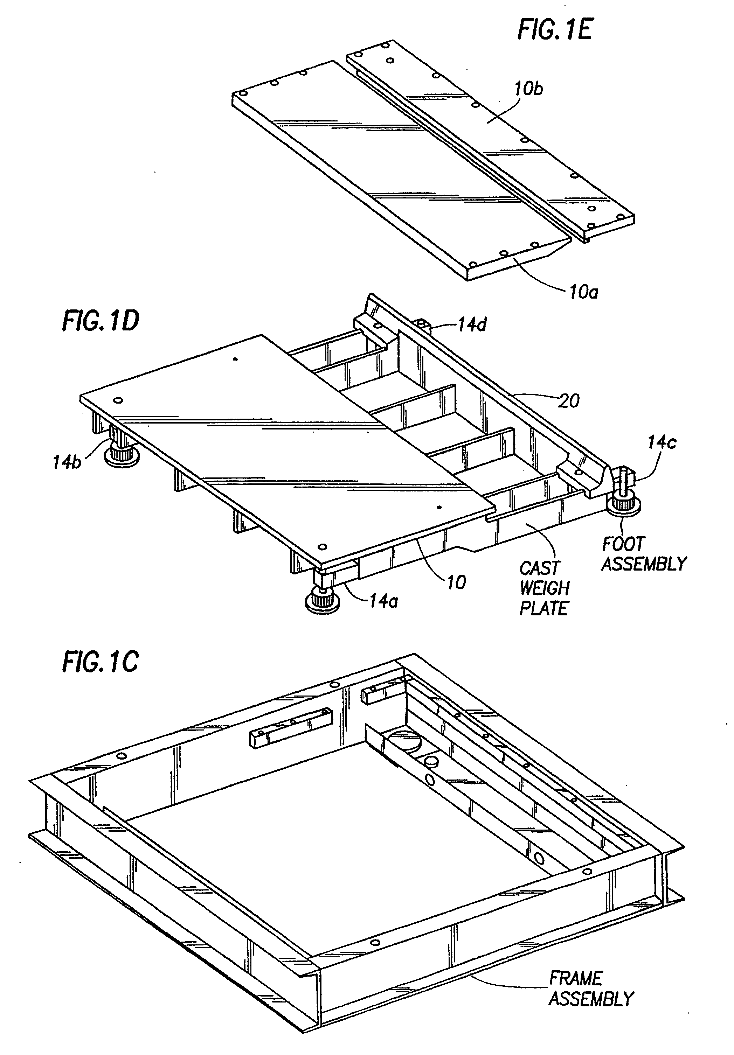

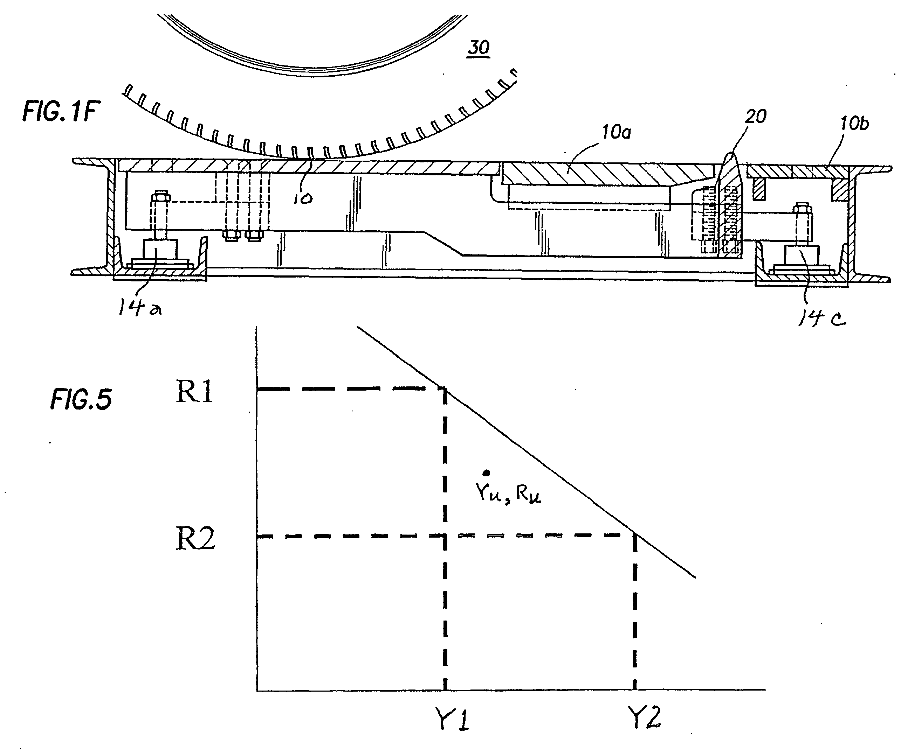

Referring now to Figures 1D and 1F, the height of the deformation bar 20 above the road surface might be, for example, 1/2 inch, preferably 3/16 inch, and the thickness of the deformation bar 20 in the direction of travel might be, for example, 1/2 inch at its base. The deformation bar 20 may be tapered from its base to a width of 3/16 inch at its top. The deformation bar 20 is longer than the width of the tire so that the entire tread width of the tire 30 rolls over the deformation bar 20.

Figures 1B, 1C, 1D, 1E and 1F show various views of the invention. Like elements use the same reference numbers throughout.

The relative degree of underinflation is determined from the above measurements. In particular, in the computer 60, the maximum reading X from the deformation bar 20 is divided by the maximum reading Y from the scale plate 10 to generate "the ratio". This ratio X/Y is, in principle, never greater than one; however, it may vary due to weight shift. When the tire is underinflated, or if the weight on the wheel is sufficiently heavy, some of the weight is taken up by the road surface 12 when the tire is at the top of the deformation bar 20 (as shown in Figure 2A), thereby reducing weight on the deformation bar 20 below the weight on the scale plate 10, and therefore reducing the ratio X/Y below a value of one. The amount by which the ratio X/Y is reduced for a given pressure depends on both the tire 30 stiffness and the weight on the tire. It has been found that underinflation of a tire can be determined solely from the ratio R and the maximum value Y of the weight on the scale plate 10 with respect to time when the tire is rolling on the scale plate 10 by comparing the ratio with a ratio corresponding to a minimum acceptable inflation pressure for said tire.

This is done by comparing the calculated ratio R (= X/Y) with a predetermined value for the ratio R pertaining to the maximum Y of the first signal. An underinflation signal is given if the calculated ratio is below the predetermined value. In this method it is not required to have prior knowledge of properties of the tire, such as its stiffness, size or type; it is only required to know predetermined values for the ratio R.

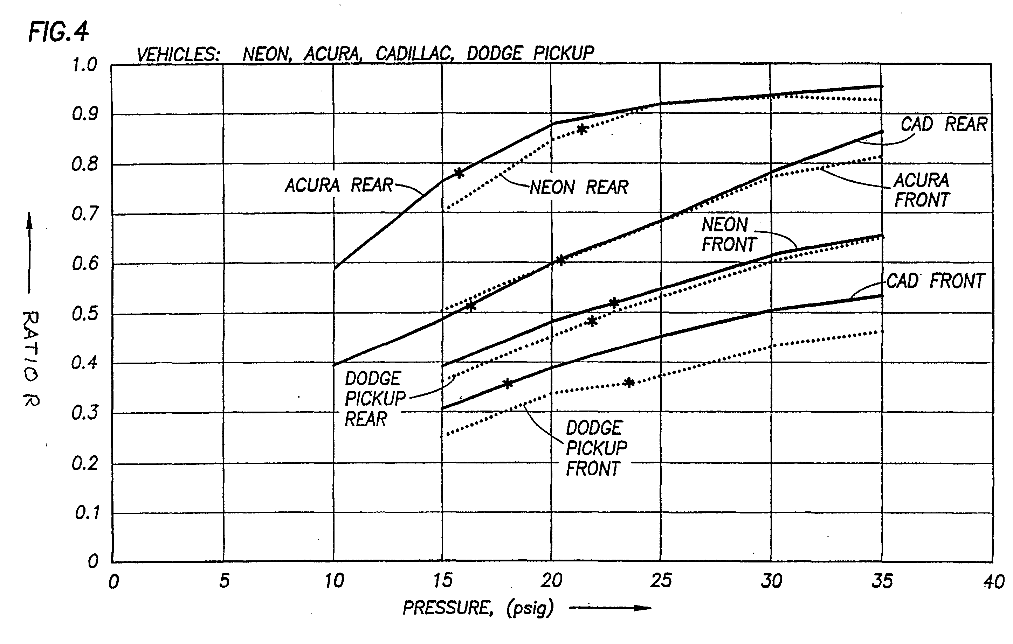

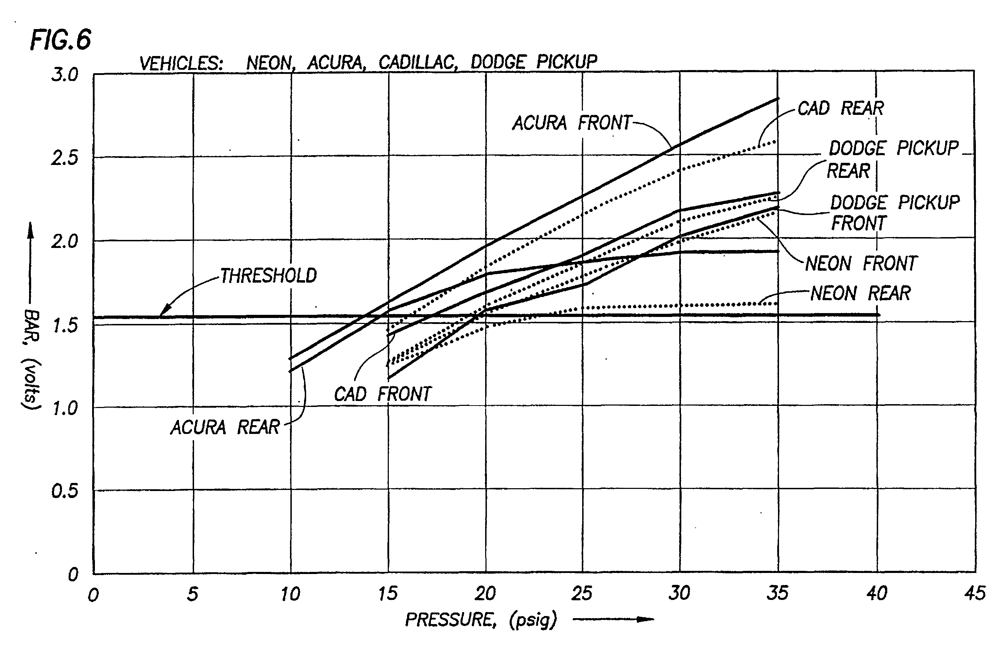

Obtaining the predetermined values for the ratio R involves determining, for a large number of combinations of vehicles and tires, the ratio R as a function of tire pressure and calculating for each combination of vehicles and tires a threshold. This will be explained with reference to Figures 4 and 5. Figure 4 shows the ratio as a function of the tire pressure for a wide range of combinations of vehicles and tires installed thereon as curves of the ratio R (= X/Y) as a function of the tire pressure. On each curve a threshold is selected, the threshold being the point on the curve where the ratio R is a predetermined amount below its maximum value, wherein the predetermined amount is at least 5% below the maximum value.

Then a curve of predetermined values for the ratios R (a threshold function) is fitted through a set of points having as coordinates the corresponding maximum value Y of the weight on the scale plate 10 with respect to time when the tire is rolling on the scale plate 10 and the corresponding ratio pertaining to the selected threshold. The asterisks in Figure 4 are values calculated from the curve of predetermined values.

In order to determine the inflation status of an unknown tire pertaining to an unknown vehicle while the tire is attached to the vehicle, a first signal is recorded which represents the weight on said tire with respect to time when the tire is rolling on a flat surface (in the form of the scale plate 10) and a second signal is recorded which represents the weight on said tire with respect to time when the tire is rolling over a raised object (in the form of the deformation bar 20). Then the maximum Y of the first signal and the maximum X of the second signal are determined, and from these values, the ratio R is calculated by dividing the maximum X of the second signal by the maximum Y of the first signal. The calculated ratio R (= X/Y) is compared with a predetermined value for the ratio R pertaining to the maximum Y of the first signal and giving an underinflation signal if the calculated ratio is below the predetermined value.

As a first approximation, the curve of predetermined values for the ratios R can be obtained from only two of these points. In this case, the thresholds pertaining to the highest and lowest curve of Figure 4 are used; these curves relate to the rear wheel of the Acura and the front wheel of the Dodge, respectively. Reference is now made to Figure 5 showing in a Y-R diagram a straight line through points (Y1, R1) and (Y2, R2), wherein the point (Y1, R1) represents the rear wheel of the Acura, and wherein (Y2, R2) represents the front wheel of the Dodge.

In Figure 5 a dot with coordinates Yu and Ru represents an underinflated tire of an unknown vehicle.

The result of this analysis is communicated to the vehicle driver, for example, by an electronically controlled display 50, such as a visual message display, computer speech generator or a printer, connected to the computer 60.

Instead of a straight line, curves of a more general shape may be used to fit a threshold function to a more extensive set of data. For example, in Figure 4, the "asterisk" on each curve denotes a calculated threshold value using a quadratic threshold function that was fitted to threshold ratios selected for each of the curves shown in Figure 4.

It will be appreciated that data other than the ratio R (= X/Y) or bar/scale can be used. For example, curves analogous to Figure 4 may be generated using only data corresponding to the weight on the deformation bar 20 and using a single-valued threshold independent of weight which is a horizontal line just below the maximum of the lower most curve. This data is presented in Figure 6. A curve (not shown) analogous to Figure 5 may be generated in the same manner using the threshold points of the high and low curves of Figure 6.

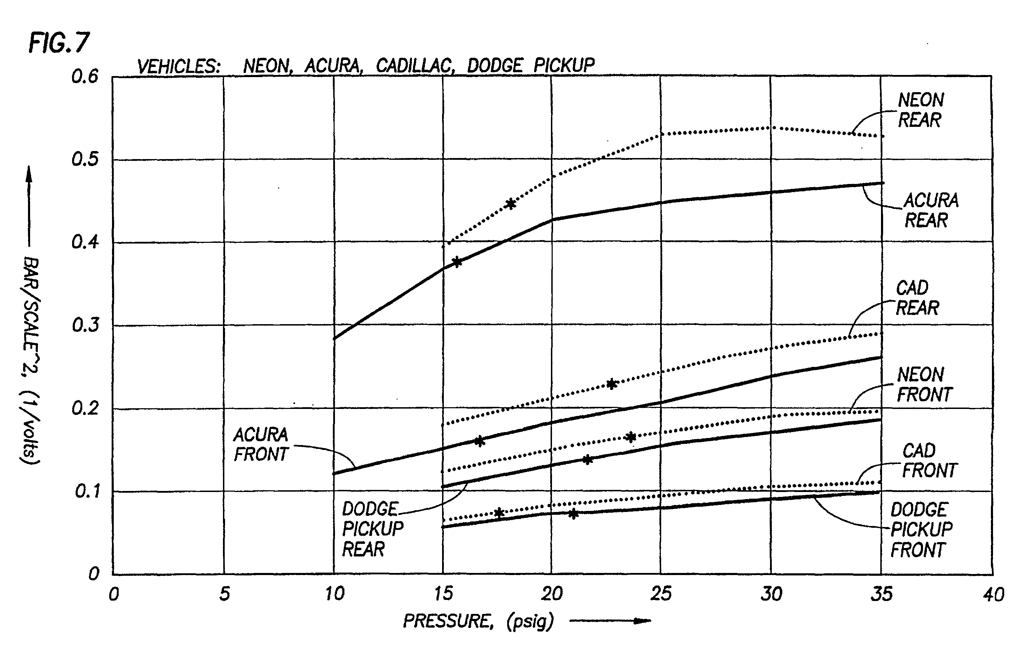

Alternatively, the ratio, bar/scale, may be generalized to bar/f (scale), where f (scale) is a generalized function of scale weight, for example, a polynomial in scale weight. The preferred implementation is bar/scale². A threshold for this ratio is determined and applied using the same method as described for the bar/scale ratio. It has been found that bar/scale² allows a wider margin between the threshold and the maximum value of the ratio (typically at 35 psi) than does bar/scale, without increasing the minimum and maximum threshold pressures. Figure 7 shows a graph of bar/scale² vs pressure including a threshold function.

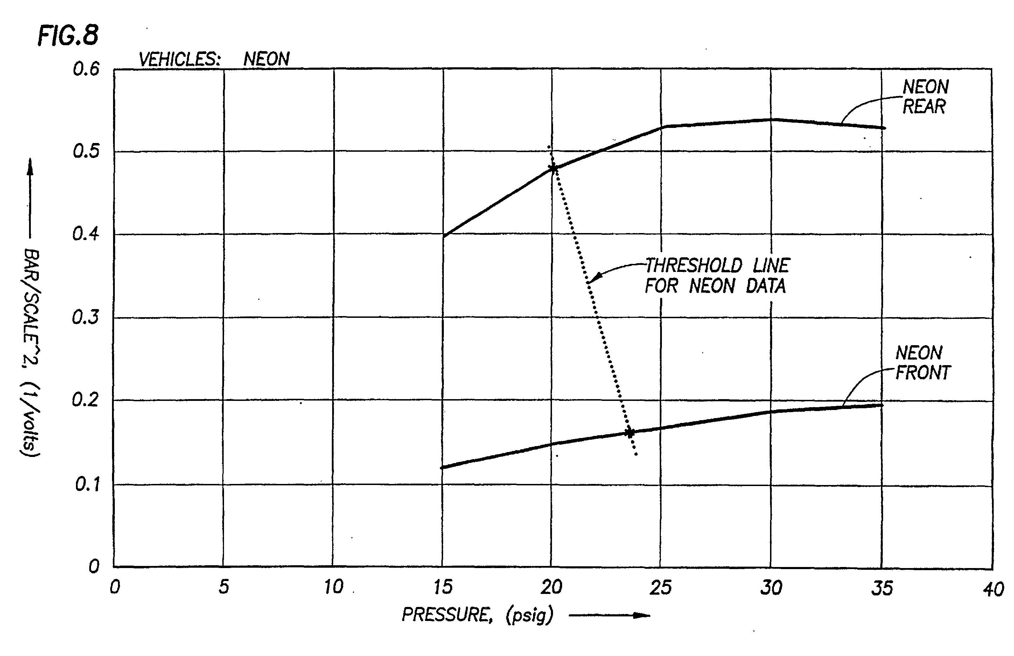

If the type of tire is known to the tire checker, a tire inflation status calculation can be performed for that specific type of tire. An example is shown in Figure 8, where the threshold has been determined for only one type of tire and set to fall between 20 and 25 psig. Communication of the tire type to the tire checker may be, for example, by manual or speech input, automatically by a wireless transponder in the vehicle, or by an automatic image scanner that reads the tire type directly off the tire. If the tire type is known, the threshold of detection can be set over a smaller range of pressure than if all possible types of tires have to be accommodated.

It will be appreciated that there are many other methods for setting thresholds and calculating tire inflation status from the data collected, which may include the time duration of the top or bottom (say at the 10 percent and 90 percent of peak levels) of each of the four peaks, or other time-related parameters. These methods are generally known as statistical classification methods.

Figure 3 shows the components used for data acquisition, calculation, and output of results. The load cells 14a-14d produce raw voltage signals. The load cell summer 40 adds together the voltages from the four load cells for each measurement, amplifies the signals from the millivolt range to the volt range and inputs these signals to the computer 60 via A/D converter 45.

The computer 60 receives the load cell summer 40 output via A/D converter 45 which converts the analog voltages from summer 40 to digital outputs for use by the computer and stores it for analysis. The A/D converter 45 may be integral with the computer 60 or may be a separate unit. The computer 60 then determines the peak scale (Y) and bar (X) readings for both the front and rear tires. It then calculates the ratio X/Y, determines the weight-dependent threshold, and determines whether the tire is underinflated. It then communicates the result to the desired output device(s) 50.

Figure 4 is a graph of the bar:scale (X/Y) weight ratio vs. actual psi (tire pressure) for a group of four vehicles with varying tire sizes. The vehicles and tire sizes are as shown in Table 1(the vehicles are shown in the order of increasing weight from top to bottom):

**TABLE 1**

| Vehicle | Tire Size |
|---|---|
| Neon | P185/65 R14 |
| Acura | P195/55R15 |
| Cadillac | P225/60 R16 |
| Dodge Pickup | P225/75 R15 |

The weight-dependent threshold for each set of measurements is denoted by an "*" sign on the curves of Figure 4. Readings to the left of the "*" signs (i.e., a lower bar:scale ratio) indicate an underinflated tire.

The data used to generate the curves shown herein were collected using a Compaq 486/33 computer using National Instruments LabVIEW software. A Z-World Micro-G2C computer programmed using dynamic C language has also been used to collect data and calculate ratios to compare ratios to thresholds, and will be used in commercial embodiments. An amplifier and summing board, Part No. API 4058G4-SUM012, supplied by Absolute Process Instruments, was used with a data acquisition board supplied by National Instruments, Model AT-MIO-16E-10. The load cells used were Rice Lake Weighing Model No. 300000, Part No. 21491 supported by foot assembly shock mounts, Part No. EF2.500, supplied by B-Tek.

The invention has been described herein by having a tire 30 first roll over a scale plate 10, then a deformation bar 20. This sequence could be reversed without detracting from the invention.

## Claims

1. An apparatus for determining the inflation status of a vehicle tire (30) while said tire is attached to said vehicle, comprising:
a scale plate (10) to be installed in a road surface (12), said scale plate being (10) supported by at least one load cell (14a, 14b, 14c, 14d);
recording means connected to said at least one load cell (14a, 14b, 14c, 14d) for recording the weight on said scale plate (10) with respect to time;
a deformation bar (20) to be installed in said road surface (12) and supported by at least one load cell (14a, 14b, 14c, 14d), said deformation bar (20) being raised above said road surface (12) and adapted to deform said tire (30) when said tire (30) rolls over said deformation bar (20);
a recording means connected to said at least one load cell (14a, 14b, 14c, 14d) for recording the weight on said deformation bar (20) with respect to time;
means for comparing a selected weight on said deformation bar (20) with a selected weight on said scale plate (10) and for forming a ratio thereof; and
means for comparing the ratio with a ratio corresponding to a minimum acceptable inflation pressure for the tire (30).

2. The apparatus of claim 1 further, wherein the means for comparing selected weights and for comparing ratios comprise:
means for calculating a ratio R by dividing the maximum X of the weight on said deformation bar with respect to time when the tire (30) is rolling over the deformation bar (20) by the maximum Y of the weight on said scale plate (10) with respect to time when the tire (30) is rolling on said scale plate (10), and means for comparing the ratio with a ratio corresponding to a minimum acceptable inflation pressure for said tire (30).

3. The apparatus according to claim 1, wherein said at least one load cell (14a, 14b, 14c, 14d) comprises a plurality of load cells (14a, 14b, 14c, 14d).

4. The apparatus according to claim 3, wherein said plurality of load cells (14a, 14b, 14c, 14d) comprises four load cells (14a, 14b, 14c, 14d).

5. The apparatus according to any one of the claims 1-4, wherein the load cell(s) (14a, 14b, 14c, 14d) used to support the scale plate (10) is (are) used to support the deformation bar (20).

6. The apparatus according to any one of claims 1-5, wherein said deformation bar (20) is longer than the width of the tire tread.

7. The apparatus according to any one of claims 1-6, wherein said deformation bar (20) is located proximate to said scale plate (10) and in the line of travel of said tire (30).

8. A method for determining the inflation status of a vehicle tire (30) while said tire (30) is installed on said vehicle, comprising the steps of:
recording a first signal representing the weight on a scale plate (10) installed in a road surface (12) with respect to time when the tire (30) is rolling on said scale plate (10);
recording a second signal representing the weight on a deformation bar (20) with respect to time when the tire (30) is rolling over said deformation bar (20), wherein the deformation bar (20) is raised above the road surface (12) and adapted to deform the tire (30) when the tire (30) rolls over the deformation bar (20);
determining the maximum Y of the first signal and the maximum X of the second signal;
calculating a ratio R by dividing the maximum X of the second signal by the maximum Y of the first signal; and
comparing the calculated ratio R = X/Y with a predetermined value for the ratio R pertaining to the maximum Y of the first signal and giving an underinflation signal if the calculated ratio is below the predetermined value.

9. The method according to claim 8, wherein the method for obtaining the predetermined value for the ratio comprises the steps of:
determining for a large number of combinations of vehicles and tires the ratio R as a function of tire pressure;
calculating for each combination of vehicles and tires a threshold; and
fitting a curve of predetermined values for the ratios R through points having as coordinates the corresponding maximum value Y of the weight on said scale plate with respect to time when the tire is rolling on said scale plate and the corresponding ratio pertaining to the threshold.

## Patentansprüche

1. Vorrichtung zum Bestimmen des Aufblaszustandes eines Fahrzeugreifens (30), während der Reifen an dem Fahrzeug befestigt ist, mit:
einer Meßplatte (10), die in einer Straßenoberfläche (12) installiert wird, wobei die Meßplatte (10) von zumindest einer Meßdose (14a, 14b, 14c, 14d) abgestützt ist;
Aufzeichnungsmittel, die mit der zumindest einen Meßdose (14a, 14b, 14c, 14d) verbunden sind, um das Gewicht auf die Meßplatte (10) bezüglich der Zeit aufzuzeichnen;
einer Deformationsstange (20), die in der Straßenoberfläche (12) installiert wird und von zumindest einer Meßdose (14a, 14b, 14c, 14d) abgestützt ist, wobei die Deformationsstange (20) über die Straßenoberfläche (12) ragt und befähigt ist, den Reifen (30) zu verformen, wenn der Reifen (30) über die Deformationsstange (20) rollt;
einem Aufzeichnungsmittel, das mit der zumindest einen Meßdose (14a, 14b, 14c, 14d) verbunden ist, um das Gewicht auf die Deformationsstange (20) bezüglich der Zeit aufzuzeichnen;
Mittel zum Vergleichen eines ausgewählten Gewichtes auf die Deformationsstange (20) mit einem ausgewählten Gewicht auf die Meßplatte (10) und zur Bildung eines Verhältnisses; und
Mittel zum Vergleichen des Verhältnisses mit einem Verhältnis, welches einem annehmbaren Mindestaufblasdruck für den Reifen (30) entspricht.

2. Vorrichtung nach Anspruch 1, bei welcher die Mittel zum Vergleichen der ausgewählten Gewichte und zum Vergleichen der Verhältnisse aufweisen:
Mittel zum Errechnen eines Verhältnisses R durch Dividieren des Maximum X des Gewichtes auf die Deformationsstange bezüglich der Zeit, wenn der Reifen (30) über die Deformationsstange (20) rollt, durch das Maximum Y des Gewichtes auf der Meßplatte (10) bezüglich der Zeit, wenn der Reifen (30) über die Meßplatte (10) rollt, und Mittel zum Vergleichen des Verhältnisses mit einem Verhältnis entsprechend einem annehmbaren Mindestaufblasdruck für den Reifen (30).

3. Vorrichtung nach Anspruch 1, bei welcher die zumindest eine Meßdose (14a, 14b, 14c, 14d) eine Vielzahl von Meßdosen (14a, 14b, 14c, 14d) umfaßt.

4. Vorrichtung nach Anspruch 3, bei welcher die Vielzahl von Meßdosen (14, 14b, 14c, 14d) vier Meßdosen (14a, 14b, 14c, 14d) aufweist.

5. Vorrichtung nach einem der Ansprüche 1 bis 4, bei welcher die Meßdose(n) (14a, 14b, 14c, 14d) zum Abstützen der Meßplatte (10) auch zum Abstützen der Deformationsstange (20) verwendet werden.

6. Vorrichtung nach einem der Ansprüche 1 bis 5, bei welcher die Deformationsstange (20) länger ist als die Breite der Reifenlauffläche.

7. Vorrichtung nach einem der Ansprüche 1 bis 6, bei welcher die Deformationsstange (20) nahe der Meßplatte (10) und in der Laufrichtung des Reifens (30) angeordnet ist.

8. Verfahren zum Bestimmen des Aufblaszustandes eines Fahrzeugreifens (30), während der Reifen (30) an dem Fahrzeug montiert ist, mit den Schritten:
Aufzeichnen eines ersten Signals, welches das Gewicht auf die in einer Straßenoberfläche (12) installierte Meßplatte (10) bezüglich der Zeit darstellt, wenn der Reifen (30) auf der Meßplatte (10) rollt;
Aufzeichnen eines zweiten Signals, welches das Gewicht auf eine Deformationsstange (20) bezüglich der Zeit darstellt, wenn der Reifen (30) über die Deformationsstange (20) rollt, wobei die Deformationsstange (20) über die Straßenoberfläche (12) vorsteht und befähigt ist, den Reifen (30) zu verformen, wenn der Reifen (30) über die Deformationsstange (20) rollt;
Bestimmen des Maximum Y des ersten Signals und des Maximum X des zweiten Signals;
Errechnen eines Verhältnisses R durch Dividieren des Maximum X des zweiten Signals durch das Maximum Y des ersten Signals; und
Vergleichen des errechneten Verhältnisses R = X/Y mit einem vorbestimmten Wert für das Verhältnis R, der sich auf das Maximum Y des ersten Signals bezieht und ein Minderaufblassignal abgibt, wenn das errechnete Verhältnis unterhalb des vorbestimmten Wertes liegt.

9. Verfahren nach Anspruch 8, bei welchem das Verfahren zur Erzielung des vorbestimmten Wertes für das Verhältnis die Schritte aufweist:
Bestimmen des Verhältnisses R als Funktion des Reifendruckes für eine große Anzahl von Kombinationen von Fahrzeugen und Reifen;
Errechnen eines Schwellenwertes für jede der Kombination von Fahrzeugen und Reifen; und
Ziehen einer Kurve der vorbestimmten Werte der Verhältnisse R durch Punkte, die als Koordinaten den entsprechenden Maximalwert Y des Gewichtes auf die Meßplatte bezüglich der Zeit haben, wenn der Reifen auf der Meßplatte rollt, und das entsprechende, sich auf den Schwellenwert beziehende Verhältnis.

## Revendications

1. Dispositif de détermination du taux de gonflage d'un pneu de véhicule (30) pendant que ledit pneu est monté sur ledit véhicule, comprenant :
un plateau de balance (10) à installer dans une surface de route (12), ledit plateau de balance (10) étant supporté par au moins une cellule de charge (14a, 14b, 14c, 14d) ;
des moyens d'enregistrement connectés à ladite cellule de charge (14a, 14b, 14c, 14d) pour enregistrer le poids sur ledit plateau de balance en fonction du temps
une barre de déformation (20) à installer sur ladite surface de route (12) et supportée par au moins une cellule de charge (14a, 14b, 14c, 14d), ladite barre de déformation (20) étant surélevée au dessus ladite surface de route (12) et prévue pour déformer ledit pneu (30) lorsqu'il roule sur ladite barre de déformation (20) ;
un moyen d'enregistrement connecté à ladite cellule de charge (14a, 14b, 14c, 14d) pour enregistrer le poids sur ladite barre de déformation (20) en fonction du temps ;
des moyens pour comparer un poids sélectionné sur ladite barre de déformation (20) avec un poids sélectionné sur ledit plateau de balance (10) et pour en déduire un rapport ; et
des moyens pour comparer le rapport avec un rapport correspondant à une pression de gonflage minimale acceptable du pneu (30).

2. Dispositif selon la revendication 1 dans lequel les moyens pour comparer des poids sélectionnés et pour comparer des rapports comprennent :
des moyens pour calculer un rapport R en divisant le maximum X du poids sur ladite barre de déformation en fonction du temps lorsque le pneu (30) roule sur ladite barre de déformation (20) par le maximum Y du poids sur ledit plateau de balance (10) en fonction du temps lorsque le pneu (30) roule sur ledit plateau de balance (10) et des moyens pour comparer le rapport avec un rapport correspondant à un une pression de gonflage minimale acceptable du pneu (30).

3. dispositif selon la revendication 1 comprenant une pluralité de cellules de charge (14a, 14b, 14c, 14d).

4. Dispositif selon la revendication 3 comprenant quatre cellules de charge (14a, 14b, 14c, 14d).

5. Dispositif selon l'une quelconque des revendications 1-4, dans lequel la(les) cellule(s) de charge (14a, 14b, 14c, 14d) utilisées pour supporter le plateau de balance (10) est(sont) utilisée(s) pour supporter la barre de déformation (20).

6. Dispositif selon l'une quelconque des revendications 1-5, dans lequel ladite barre de déformation (20) est plus longue que la largeur de l'empreinte du pneu.

7. Dispositif selon l'une quelconque des revendication 1-6, dans lequel ladite barre de déformation (20) est localisée à proximité dudit plateau de balance (10) et dans la trajectoire de déplacement dudit pneu (30).

8. Procédé de détermination du taux de gonflage d'un pneu de véhicule (30) pendant que le pneu (30) est monté sur ledit véhicule, comprenant les étapes de :
enregistrer un premier signal représentant le poids sur un plateau de balance (10) installé dans une surface de route (12) en fonction du temps lorsque le pneu (30) roule sur ledit plateau de balance (10) ;
enregistrer un second signal représentant le poids sur une barre de déformation (20) en fonction du temps lorsque le pneu (30) roule sur ladite barre de déformation (20),
dans lequel la barre de déformation (20) est surélevée au dessus de la surface de route (12) et prévue pour déformer le pneu (30) lorsqu'il roule sur ladite barre de déformation (20) ;
déterminer le maximum Y du premier signal et le maximum X du second signal ;
calculer le rapport R en divisant le maximum X du second signal par le maximum Y du premier signal ; et
comparer le rapport calculé R=Y/X avec une valeur prédéterminée du rapport R relative au maximum Y du premier signal et fournissant un signal de sous gonflage si le rapport calculé est inférieur à la valeur prédéterminée.

9. Procédé selon la revendication 8, dans lequel la méthode de détermination de la valeur prédéterminée du rapport comprend les étapes de :
déterminer le rapport R en fonction de la pression de pneu pour un grand nombre de combinaisons de véhicules et de pneus ;
calculer un seuils pour chaque combinaison de véhicule et de pneus ; et
tracer une courbe de valeurs prédéterminées des rapports R au travers de points dont les coordonnées sont la valeur maximale Y du poids sur le plateau de balance en fonction du temps lorsque le pneu roule sur le plateau de balance et le rapport correspondant relatif au seuil.
